# EUROPÄISCHE PATENTSCHRIFT

(11) **EP 1 977 090 B1**
(45) Veröffentlichungstag und Bekanntmachung des Hinweises auf die Patenterteilung: **30.12.2009**
(21) Anmeldenummer: 07704176.2
(22) Anmeldetag: 26.01.2007
(51) Int. Cl.: F01N 3/20

(54) **VORRICHTUNG ZUR REDUKTION VON STICKOXIDEN IM ABGAS VON BRENNKRAFTMASCHINEN**
DEVICE FOR THE REDUCTION OF NITROGEN OXIDES IN THE EXHAUST GAS OF INTERNAL COMBUSTION ENGINES
DISPOSITIF DE REDUCTION DES OXYDES D'AZOTE DANS LES GAZ D'ECHAPPEMENT DE MOTEURS A COMBUSTION INTERNE

(30) Priorität: 27.01.2006 DE 102006004170
(43) Veröffentlichungstag der Anmeldung: 08.10.2008
(73) Patentinhaber: Pierburg GmbH, 41460 Neuss (DE); Technische Universität Kaiserslautern, 67663 Kaiserslautern (DE)
(72) Erfinder: DISMON, Heinrich, 53538 Gangelt (DE); KÖSTER, Andreas, 45149 Essen (DE); LAPPAN, Rolf, 50733 Köln (DE); NOWAK, Martin, 40476 Düsseldorf (DE); MÜLLER, Werner, 67663 Kaiserslautern (DE)
(74) Vertreter: Patentanwälte ter Smitten
(86) Internationale Anmeldenummer: PCT/EP2007/050786
(87) Internationale Veröffentlichungsnummer: WO 2007/085646

(56) Entgegenhaltungen:
- EP-A- 1 607 372
- EP-A1- 1 338 562
- DE-A1- 10 148 880
- DE-A1- 19 738 737
- JP-A- 2000 220 437

## Beschreibung

Die Erfindung betrifft eine Vorrichtung zur Reduktion von Stickoxiden im Abgas von Brennkraftmaschinen. Insbesondere ist die Vorrichtung zum Einsatz bei Kraftfahrzeugen, insbesondere bei Kraftfahrzeugen mit Dieselmotor geeignet.

In EP 1 338 562 ist ein Verfahren und eine Vorrichtung zur Erzeugung von Ammoniak beschrieben. Hierbei wird trockener Harnstoff in einem elektrisch beheizten Reaktor zu Ammoniak und Isocyansäure zersetzt. Zur Hydrolyse der Isocyansäure zu Ammoniak ist dem Reaktor ein Hydrolyse-Katalysator nachgeordnet. Der Thermolyse-Reaktor und der Hydrolyse-Katalysator sind dabei in eine einzige Einheit integriert. Das zur Hydrolyse erforderliche Wasser wird durch einen relativ geringen Abgasstrom dem Hydrolyse-Katalysator zugeführt. Der Abgasteilstrom wird dem Abgasstrom entnommen und muss so begrenzt sein, dass in allen Betriebszuständen der Brennkraftmaschine für die Hydrolyse eine ausreichende Wassermenge zur Verfügung steht. Zusätzliche Abgasmengen würden eine Kühlung des Thermolyse-Reaktors hervorrufen, bzw. eine zusätzliche Heizleistung erforderlich machen. Um in den unterschiedlichen Betriebsbereichen der Brennkraftmaschine eine entsprechende Abgasmenge dem Hydrolyse-Reaktor zuführen zu können, ist ein regelbares Ventil in der Entnahmeleitung, durch die der Abgasteilstrom strömt, vorteilhaft. Ferner ist es erforderlich den Abgasteilstrom für jede Brennkraftmaschine an alle stationären und instationären Fahrtzustände anzupassen. Dies verursacht einen erheblichen Applikationsaufwand. Bei einem zu geringen Abgasteilstrom entstehen nach kurzer Zeit Ablagerungen in der Leitung, die vom Reaktor in den Abgaskanal führt und durch die das Ammoniak und andere Reaktionsprodukte dem Abgas zugeführt werden.

Ferner weist die in EP 1 338 562 beschriebene Vorrichtung den Nachteil auf, dass im Motorraum ein entsprechender Bauraum vorgesehen sein muss. Ferner ist bei dieser Vorrichtung ein spezieller Hydrolyse-Katalysator erforderlich, der dem Thermolyse-Reaktor unmittelbar nachgeschaltet sein muss. Die vorstehend beschriebenen Nachteile des in EP 1 338 562 beschriebenen Reaktors führen dazu, dass ein derartiger Reaktor teuer ist.

Des Weiteren ist aus der DE 197 38 737 A1 ein Katalysator sowie eine Abgasleitung einer Verbrennungskraftmaschine bekannt, wobei der Katalysator sowohl eine Hydrolyseaktivität zur Umwandlung eines Reduktionsmittels in Ammoniak als auch eine SCR-Aktivität zum Abbau von Stickoxiden aufweist. Diesem Katalysator wird eine wässrige Harnstofflösung zugeführt, ohne zuvor eine Thermolyse durchzuführen. Eine zuverlässige Umwandlung des notwendigen Anteils der Harnstofflösung in Ammoniak kann auf diese Weise nicht sichergestellt werden, da kein Thermolysereaktor verwendet wird.

Weiterhin sind Vorrichtungen zur Erzeugung von Ammoniak aus flüssigem Harnstoff bekannt. Diese weisen jedoch prinzipbedingt Nachteile auf, so dass eine zuverlässige Reduktion von Stickoxiden im Abgas erschwert ist. Zu den Nachteilen von Flüssigharnstoffsystemen gehört beispielsweise, dass die wässrige Harnstofflösung bei Außentemperaturen unterhalb von ca. -11°C gefriert, so dass das System vor der Inbetriebnahme beheizt werden muss. Dies erhöht die Systemkosten und kann die Systemfunktion beeinträchtigen. Diese Problematik besteht bei Festharnstoffsystemen nicht. Weiterhin weist ein Festharnstoffsystem gegenüber einem Flüssigharnstoffsystem verbesserte Kaltstart-Eigenschaften auf. Dies liegt darin begründet, dass die Thermolyse des Harnstoffs bei einem Festharnstoffsystem unabhängig von der Abgastemperatur in einem separat beheizten Thermolyse-Reaktor erfolgt. Dieser kann die für eine vollständige Thermolyse des Harnstoffs benötigte Mindesttemperatur früher erreichen.

Weiterhin können Flüssigharnstoffsysteme den Anforderungen im Bezug auf Gewicht und Platzbedarf nicht gerecht werden. Zur Erzeugung einer vergleichbaren Ammoniakmasse beansprucht Festharnstoff, beispielsweise in Form von Kügelchen, nur ca. ein Drittel des Speichervolumens und ebenfalls ca. ein Drittel der Speichermasse im Vergleich zu einer wässrigen Harnstofflösung. Dies ist von großer Bedeutung für den im Fahrzeug erforderlichen Bauraum und das Mehrgewicht bzw. für die mit einer Harnstofffüllung zu bewältigende Fahrstrecke.

Weitere Nachteile ergeben sich durch das korrosive Verhalten einer wässrigen Harnstofflösung gegenüber einigen Materialien sowie aus der Instabilität der wässrigen Harnstofflösung, die nach einigen Monaten zu partieller Kristallbildung neigen kann, so dass die Systemfunktion beeinträchtigt wird. Aus den genannten Gründen ist prinzipiell der Einsatz von Festharnstoffsystemen gegenüber Flüssigharnstoffsystemen bevorzugt.

Aufgabe der Erfindung ist es eine einfachere und kostengünstigere Konstruktion einer Vorrichtung zur Reduktion von Stickoxiden im Abgas von Brennkraftmaschinen, insbesondere Kraftfahrzeug-Brennkraftmaschinen zu schaffen.

Die Lösung der Aufgabe erfolgt erfindungsgemäß durch eine Vorrichtung gemäß Anspruch 1.

Die erfindungsgemäße Vorrichtung zur Reduktion von Stickoxiden weist einen Thermolyse-Reaktor zur Erzeugung von Ammoniak aus festem Harnstoff auf, in dem aus einer Ammoniak erzeugenden, festen Substanz durch Wärmezufuhr Ammoniak gewonnen wird. Bei der Substanz handelt es sich um Harnstoff in fester Form. Jedoch können auch weitere geeignete Feststoffe verwendet werden. Der feste Harnstoff liegt hierbei insbesondere in Pellets oder Kügelchen vor und wird dem Thermolyse-Reaktor dosiert bzw. vereinzelt zugeführt. Eine entsprechende Dosiervorrichtung ist in DE 102 51 498 beschrieben. Erfindungsgemäß ist das Verwenden von festem Harnstoff oder anderen geeigneten festen Substanzen vorgesehen, da die Bevorratung in einem entsprechenden Vorratsbehälter einfacher und sicherer ist. Zur Erwärmung eines in dem Thermolyse-Reaktor vorgesehenen Thermolyseraums ist mit dem Thermolyse-Reaktor eine Heizeinrichtung verbunden.

Ein wesentlicher Aspekt der Erfindung besteht darin, dass der Thermolyse-Reaktor in und/oder an dem Abgaskanal angeordnet ist. Der Thermolyse-Reaktor ist somit in einer Ausführungsform unmittelbar angrenzend an den Abgaskanal angeordnet. Dies hat den Vorteil, dass die Temperatur des Abgases zur Erwärmung des Thermolyse-Reaktors genutzt wird. Ebenso kann der Thermolyse-Reaktor in einer weiteren Ausführungsform teilweise in den Abgaskanal hineinragen. Bei einer besonders bevorzugten Ausführungsform ist der Thermolyse-Reaktor vollständig innerhalb des Abgaskanals angeordnet. Dies hat den Vorteil, dass die erforderliche Leistung der Heizeinrichtung reduziert werden kann, da es sich bei der Heizeinrichtung lediglich um eine Zusatz-Heizeinrichtung handeln muss, um den Thermolyse-Reaktor in vorzugsweise allen Betriebszuständen der Brennkraftmaschine auf Reaktionstemperatur zu bringen.

Bei der Erzeugung von Ammoniak aus Harnstoff entsteht als Nebenprodukt Isocyansäure. Diese kann durch Hydrolyse in Ammoniak umgewandelt werden. Erfindungsgemäß ist daher der Thermolyse-Reaktor in Strömungsrichtung vor dem Katalysator der zur Stickstoff-Reduktion in dem Abgaskanal angeordnet ist, angeordnet. Bei dem Katalysator handelt es sich insbesondere um einen SCR-Katalysator. Das aus dem Thermolyse-Reaktor austretende Ammoniak sowie die ggf. zusätzlich entstehenden weiteren Reaktionsprodukte, insbesondere die Isocyansäure, treten somit zusammen mit dem Abgas in den SCR-Katalysator ein. Dadurch dass durch das Abgas dem SCR-Katalysator stets eine ausreichende Menge an Wasser zugeführt wird, erfolgt in dem SCR-Katalysator eine Hydrolyse der Isocyansäure zu Ammoniak. Erfindungsgemäß wird somit der SCR-Katalysator zusätzlich als Hydrolyse-Reaktor verwendet. Ein gesonderter, dem Thermolyse-Reaktor nachgeordneter, Hydrolyse-Katalysator ist nicht erforderlich. Die Thermolyse-Produkte können unmittelbar in das Abgas eingeleitet werden.

Dadurch, dass dem Thermolyse-Reaktor kein Hydrolyse-Katalysator nachgeordnet ist, wird es möglich, den Thermolyse-Reaktor auf einfache Weise in unmittelbarer Nähe des Abgaskanals oder sogar innerhalb des Abgaskanals anzuordnen. Bekannte Thermolyse-Reaktoren, in die ein Hydrolyse-Katalysator integriert ist, sind für eine solche Anordnung nicht geeignet.

Besonders bevorzugt wird der Thermolyse-Reaktor durch eine Bohrung in das Abgasrohr eingeführt und ragt zumindest teilweise in dieses hinein. Diese Anordnung dient einer möglichst effektiven Durchmischung der Thermolyse-Produkte mit dem Abgasstrom. Dabei weist das Motorabgas selbst in weiten Betriebsbereichen Temperaturen auf, die deutlich unter dem Temperaturniveau innerhalb des Thermolysereaktors liegen. Folglich findet in der turbulenten Abgasströmung ein intensiver Wärmetransport vom Thermolyse-Reaktor in das Abgas statt, der bei einer externen Anordnung des Thermolyse-Reaktors beispielsweise im Motorraum nicht vorhanden ist. Es kommt daher zwangsweise zu einer Abkühlung bestimmter Bereiche des Thermolyse-Reaktors durch das vorbeiströmende Abgas, so dass die thermischen Anforderungen in Bezug auf eine sichere Thermolyse nicht immer erfüllt sind. Insbesondere problematisch in diesem Zusammenhang ist ein chemisches Weiterreagieren der bei der Thermolyse entstehenden Isocyansäure, das insbesondere stattfindet, wenn Teile des Innenbereiches des Thermolyse-Reaktors auf eine Temperatur von unter 350 - 400 °C abgekühlt werden. Zur Vermeidung einer solchen Abkühlung ist es daher nötig, eine speziell angepasste Auslegung der elektrischen Beheizung und der Verteilung der Heizleistung in verschiedenen Zonen des Thermolyse-Reaktors vorzunehmen. Beispielsweise kann dafür die Heizeinrichtung im Thermolyse-Reaktor an Stellen, die durch das Abgas stärker abgekühlt werden, eine höhere Heizleistung zur Verfügung stellen.

Ein weiterer Vorteil der erfindungsgemäßen Vorrichtung besteht darin, dass der Thermolyse-Reaktor unmittelbar an und/oder in dem Abgaskanal angeordnet werden kann. Ein entsprechender Platz im Motorraum ist somit nicht erforderlich. Ggf. kann der Thermolyse-Reaktor auch in einer Bypassleitung des Abgaskanals vorgesehen sein.

Die Entnahme eines exakten Abgasteilstroms aus dem Abgaskanal, um diesen einem Hydrolyse-Reaktor, wie in EP 1 338 562 beschrieben, zuzuführen, ist erfindungsgemäß nicht erforderlich. Ein entsprechendes regelbares Ventil zur Regelung des Abgasteilstroms in Abhängigkeit von entsprechenden Betriebszuständen, ist somit ebenfalls nicht erforderlich.

Die erfindungsgemäße Vorrichtung ist daher einfach aufgebaut und problemlos an Brennkraftmaschinen zu applizieren. Es handelt sich daher um eine preiswerte Vorrichtung zu thermischen Aufbereitung von Ammoniak erzeugenden Substanzen, insbesondere Harnstoff.

Vorzugsweise handelt es sich bei der Heizeinrichtung um eine elektrische Heizeinrichtung. Dies hat den Vorteil, dass die Heizeinrichtung auf einfache Weise geregelt werden kann. Hierdurch ist es möglich, die erforderliche Temperatur im Thermolyseraum exakt einzustellen und somit in den unterschiedlichen Betriebzuständen eine für die Thermolyse erforderliche Temperatur sicherzustellen.

Bei einer bevorzugten Ausführungsform ist der Thermolyse-Reaktor in Strömungsrichtung des Abgases einem Oxidations-Katalysator nachgeschaltet. Der Thermolyse-Reaktor ist somit zwischen dem Oxidations-Katalysator und dem SCR-Katalysator angeordnet. In dem Oxidations-Katalysator findet im Wesentlichen eine exotherme Oxidation von unverbrannten Kohlenwasserstoffen und Kohlenmonoxid statt. Die Anordnung des Thermolyse-Reaktors in Strömungsrichtung nach dem Oxidations-Katalysator hat somit den Vorteil, dass die in dem Oxidations-Katalysator entstehende Wärme zur Erwärmung des Thermolyse-Reaktors genutzt werden kann. Vorzugsweise ist der Thermolyse-Reaktor daher in unmittelbarer Nähe zum Oxidations-Katalysator angeordnet. Besonders bevorzugt ist es hierbei, dass der Thermolyse-Reaktor mit dem Oxidations-Katalysator thermisch gekoppelt ist. Insbesondere liegt der Thermolyse-Reaktor an dem Oxidations-Katalysator an. Vorzugsweise liegt eine Heizfläche des Thermolyse-Reaktors an dem Oxidations-Katalysator an.

Bei einer weiteren bevorzugten Ausführungsform der Erfindung ist der Thermolyse-Reaktor zumindest teilweise innerhalb des Oxidations-Katalysators angeordnet. Der Oxidations-Katalysator ist hierbei zumindest im Bereich des Thermolyse-Reaktors ringförmig ausgebildet und umgibt den Thermolyse-Reaktor somit vorzugsweise entlange seines Umfangs. Hierbei ist die Heizfläche des Thermolyse-Reaktors im Wesentlichen senkrecht zur Strömungsrichtung des Abgases angeordnet, um eine gute Erwärmung des Thermolyse-Reaktors zu gewährleisten.

Bei der Ausführungsform der Erfindung, bei der eine Erwärmung des Thermolyse-Reaktors auf Grund der in dem Oxidations-Katalysator entstehenden Wärme erfolgt, kann eine zusätzliche Heizeinrichtung ggf. entfallen. Insbesondere kann die Heizeinrichtung, bei der es sich vorzugsweise wiederum um eine elektrische Heizeinrichtung handelt, kleiner ausgelegt werden. Hierdurch können die Kosten weiter reduziert werden.

Zusätzlich zu einer elektrischen Heizeinrichtung, ist es möglich, dem Oxidations-Katalysator über eine Kraftstoff-Zuführeinrichtung Kraftstoff zuzuführen. Dies erfolgt in dem Oxidations-Katalysator und erhöht somit die zur Erwärmung des Thermolyse-Reaktors nutzbare Temperatur. Insbesondere erfolgt die Kraftstoffzufuhr mit Hilfe einer Einspritzdüse, die vorzugsweise in Strömungsrichtung vor dem Oxidations-Katalysator angeordnet ist. Durch eine Einspritzdüse kann gezielt Kraftstoff dem Oxidations-Katalysator zugeführt werden. Vorzugsweise weist die Kraftstoff-Zuführeinrichtung daher ein regelbares Ventil auf, so dass die zugeführte Kraftstoffmenge regelbar ist. Die Kraftstoffzufuhr kann somit in Abhängigkeit der in dem Thermolyseraum herrschenden Temperatur geregelt werden.

Vorzugsweise erfolgt die Kraftstoffzufuhr nur in einem Teilbereich des Oxidations-Katalysators. Vorzugsweise handelt es sich hierbei um den Teilbereich des Oxidations-Katalysators, der unmittelbar an den Thermolyse-Reaktor angrenzt. Dies hat den Vorteil, dass der zugeführte Kraftstoff im Wesentlichen vollständig zur Erwärmung des Thermolyse-Reaktors genutzt wird.

Besonders bevorzugt ist es, dass der Oxidations-Katalysator in diesem Teilbereich eine Zusatzbeschichtung aufweist, um eine insbesondere katalytische Verbrennung zu erleichtern.

Da die Hydrolyse der Isocyansäure erfindungsgemäß in dem SCR-Katalysator erfolgt, ist vorzugsweise eine möglichst gleichmäßige Verteilung der aus dem Thermolyse-Reaktor austretenden Reaktionsprodukten vorteilhaft. Hierzu kann zwischen dem Thermolyse-Reaktor und dem SCR-Katalysator ein Mischer vorgesehen sein. Hierdurch ist sicher gestellt, dass sämtliche in dem Thermolyse-Reaktor erzeugten Reaktionsprodukte über die Eintrittsfläche des SCR-Katalysators im Wesentlichen gleichmäßig verteilt sind. Hierdurch ist gewährleistet, dass ein möglichst großer Anteil, der in dem Abgas vorhandenen Stickoxide, in dem SCR-Katalysator reduziert werden.

Nachfolgend wird die Erfindung anhand bevorzugter Ausführungsformen unter Bezugnahme auf die anliegenden Zeichnungen näher erläutert.

Es zeigen:
- Fig. 1: eine schematische Darstellung eines Thermolyse-Reaktors,
- Fig. 2: eine schematische Darstellung einer ersten Ausführungsform einer erfindungsgemäßen Vorrichtung,
- Fig. 3: eine schematische Darstellung einer zweiten Ausführungsform einer erfindungsgemäßen Vorrichtung, und
- Fig. 4: eine schematische Darstellung einer dritten Ausführungsform einer erfindungsgemäßen Vorrichtung.

Ein Thermolyse-Reaktor 10 weist in einer bevorzugten Ausführungsform ein Gehäuse 12 auf, das im Wesentlichen becherförmig ist und somit an einer Seite 14 offen ist. Innerhalb des Gehäuses ist ein beheizbares Element 16 angeordnet. Es handelt sich hierbei beispielsweise um einen mehrere Kanäle 18 aufweisenden Körper aus hitzebeständigem Material. Insbesondere kann dass beheizbare Element 16 Metall oder Keramik aufweisen und ggf. mit diesem beschichtet sein. Die beheizbaren Elemente 16 können über eine elektrische Heizeinrichtung 17 beheizt werden.

Innerhalb des Gehäuses 12 und insbesondere auch innerhalb des beheizbaren Elements 16 ist ein Thermolyseraum 20 angeordnet. Über eine Zuführleitung 22 können dem Thermolyseraum Substanzen zur Erzeugung von Ammoniak zugeführt werden. Vorzugsweise werden als Substanz Harnstoffe zugeführt. Der Harnstoff liegt in fester Form als Pellets oder Kügelchen 24 vor. Die Kügelchen 24 werden in dem Thermolyseraum 20 erwärmt. Hierdurch entsteht als Reaktionsprodukt Ammoniak und Isocyansäure. Diese Reaktionsprodukte strömen durch die Kanäle 18 in Richtung der Pfeile 25 an der Seite 14 des Thermolyse-Reaktors aus.

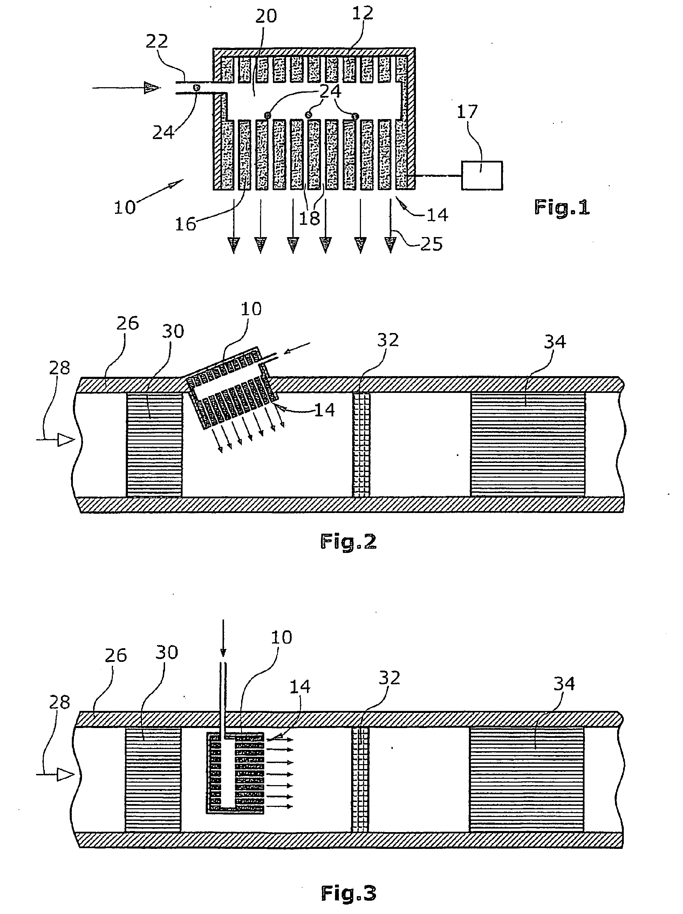

Gemäß einer ersten bevorzugten Ausführungsform der Erfindung (Fig. 2) ist der Thermolyse-Reaktor 10, bei dem es sich insbesondre um einen entsprechend Fig. 1 ausgebildeten Thermolyse-Reaktor handelt, an einem Abgaskanal 26 angeordnet. In dem in Fig. 2 dargestellten Ausführungsbeispiel ragt der Thermolyse-Reaktor 10 teilweise in den Abgaskanal 16 hinein, wobei die offene Vorderseite 14 des Thermolyse-Reaktors 10 in den Kanal 26 weist.

In Strömungsrichtung 28, vor dem Thermolyse-Reaktor 10, ist ein Oxidations-Katalysator 30 angeordnet. Das Abgas strömt somit durch den Oxidations-Katalysator 30, in dem eine Oxidation stattfindet. Der Oxidations-Katalysator dient der Kohlenwasserstoff- und CO-Oxidation sowie der NO2-Bildung zur Erhöhung der Niedertemperaturaktivität des SCR-Katalysators. Eine insbesondere elektrische Heizeinrichtung, die mit den beheizbaren Elementen 16 (Fig. 1) verbunden ist, kann schwächer ausgelegt werden. Hierdurch können die Kosten reduziert werden. Das Abgas strömt an dem Thermolyse-Reaktor 10 entlang und erwärmt diesen.

Um die Temperatur in dem Thermolyseraum 20 möglichst konstant zu halten, ist die elektrische Heizeinrichtung 17 regelbar. Dies ist insbesondere auf Grund der in Abhängigkeit der unterschiedlichen Betriebzuständen auftretenden unterschiedlichen Abgastemperaturen vorteilhaft.

In Strömungsrichtung 28 dem Thermolyse-Reaktor 10 nachgeordnet, ist ein Mischer 32 in dem Abgaskanal 26 vorgesehen. Durch den Mischer erfolgt ein Durchmischen des Abgasstroms, so dass das von dem Thermolyse-Reaktor abgegebene Ammoniak sowie die abgegebene Isocyansäure gleichmäßig im Abgasstrom verteilt wird. Dies hat den Vorteil, dass ein im Wesentlichen homogenes Gemisch in einen in Strömungsrichtung 28 dem Mischer 32 nachgeordneten SCR-Katalysator 34 strömt. Hierdurch kann eine gute Reduzierung der Stickoxide in dem Abgas gewährleistet werden.

Bei einer zweiten bevorzugten Ausführungsform (Fig. 3) sind die selben und ähnliche Bauteile mit den selben Bezugszeichen gekennzeichnet. Die in Fig. 3 dargestellte Ausführungsform unterscheidet sich gegenüber der in Fig. 2 dargestellten Ausführungsform lediglich dadurch, dass der Thermolyse-Reaktor 10 vollständig innerhalb des Abgaskanals 26 angeordnet ist. Hierbei kann der Thermolyse-Reaktor 10 wie dargestellt, mittig im Abgaskanal 26, jedoch auch am Rand des Abgaskanals 26 angeordnet sein. Hierbei ist der Thermolyse-Reaktor 10 beispielsweise über Stege in dem Abgaskanal 26 gehalten oder unmittelbar mit einer Innenwand des Abgaskanals 26 verbunden.

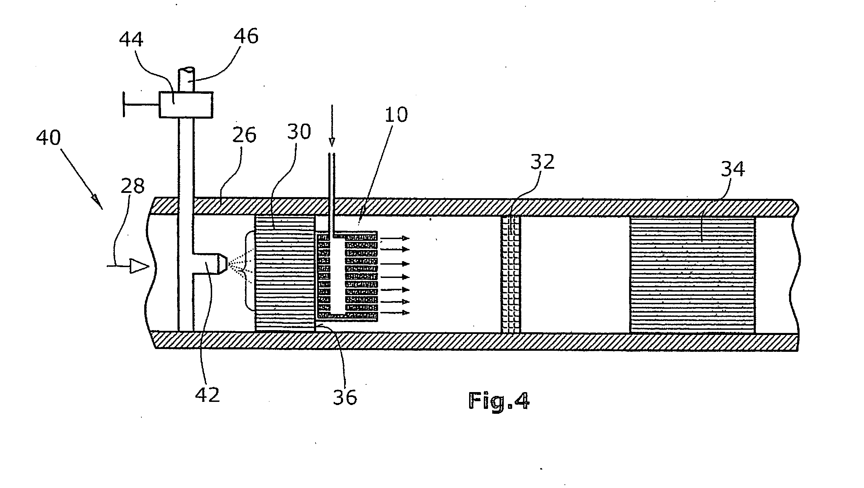

In einer dritten bevorzugten Ausführungsform (Fig. 4) sind die selben und ähnliche Bauteile wiederum mit den selben Bezugszeichen gekennzeichnet. Bei dieser Ausführungsform besteht die Besonderheit darin, dass der Thermolyse-Reaktor 10 an einer Außenseite 36 des Oxidations-Katalysators 30 anliegt. Somit liegt eine Heizfläche 38, die Teil des Gehäuses 12 (Fig. 1) sein kann, an der Außenseite 36 an. Hierdurch ist ein gute Übertragung der in dem Oxidations-Katalysator 30 entstehenden Wärme auf den Thermolyse-Reaktor 10 gewährleistet.

Vorzugsweise ist dem Oxidations-Katalysator 30 in Strömungsrichtung 28 vorgelagert eine Kraftstoff-Zuführeinrichtung 40 vorgesehen. Die Kraftstoff-Zuführeinrichtung 40 weist eine Einspritzdüse 42 auf. Durch die Einspritzdüse 42 kann Kraftstoff in den Oxidations-Katalysator 30 eingespritzt werden. Dies führt zu einem katalytischen Verbrennen des Kraftstoffs in dem Oxidations-Katalysator 30.

Zur Regelung der dem Oxidations-Katalysator 30 zugeführten Kraftstoffmenge weist die Kraftstoff-Zuführeinrichtung ferner ein insbesondere regelbares Ventil 44 auf. Eine Kraftstoffleitung 46 der Kraftstoff-Zuführeinrichtung 40 kann unmittelbar mit dem Kraftstofftank verbunden sein.

Vorzugsweise erfolgt das Einspritzen des Kraftstoffs lediglich in einem Teilbereich 48 des Oxidations-Katalysators 30. Bei dem Teilbereich 48 handelt es sich um den in Strömungsrichtung 28 unmittelbar vor dem Thermolyse-Reaktor 10 angeordneten Bereich des Oxidations-Katalysators 30. Die Wärme entsteht somit in einem insbesondere zylindrischen Bereich des Oxidations-Katalysators 30, der sich in Strömungsrichtung 28 erstreckt und an die Heizfläche 38 angrenzt. Hierdurch ist ein zusätzliches Erzeugen von Wärme in Bereichen des Oxidations-Katalysators 30 vermieden, die nicht zur Erwärmung des Thermolyse-Reaktors 10 genutzt werden kann.

Das Einspritzen des Kraftstoffes in den Oxidations-Katalysator erfolgt zweckmäßigerweise erst ab einer Katalysatortemperatur von über 180 ° da bei dem Einspritzen von herkömmlichem Kraftstoff erst ab dieser Temperatur eine Aktivität entwickelt wird.

## Patentansprüche

1. Vorrichtung zur Reduktion von Stickoxiden im Abgas von Brennkraftmaschinen, mit
einem Thermolysereaktor (10) zur Erzeugung von Ammoniak aus einem festen Harnstoff,
einer mit dem Thermolysereaktor (10) thermisch gekoppelten Heizeinrichtung (17, 40) zum Erwärmen eines Thermolyseraurms (20) des Thermolysereaktors (10) und
einem dem Thermolysreaktor (10) in Strömungsrichtung (28) des Abgases in dem Abgaskanal (26) nachgeschalteten SCR-Katalysator (34), in dem das Ammoniak gegebenenfalls zusammen mit weiteren Reaktionsprodukten einströmt,
wobei der SCR-Katalysator (34) zusätzlich als Hydrolyse-Katalysator fungiert,
**dadurch gekennzeichnet, dass**
der Thermolysereaktor (10) unmittelbar angrenzend an den Abgaskanal (26) oder zumindest teilweise in den Abgaskanal (26) hineinragend angeordnet ist.

2. Vorrichtung nach Anspruch 1, **dadurch gekennzeichnet, dass** die Heizeinrichtung (17) als elektrische Heizeineinrichtung ausgebildet ist.

3. Vorrichtung nach dem Anspruch 1 oder 2, **dadurch gekennzeichnet, dass** dem Thermolyse-Reaktor (10) in Strömungsrichtung (28) ein Oxidations-Katalysator (30) vorgeschaltet ist.

4. Vorrichtung nach Anspruch 3, **dadurch gekennzeichnet, dass** der Thermolyse-Reaktor (10) in unmittelbarer Nähe zum Oxidations-Katalysator (30) angeordnet ist, so dass ein Erwärmen des Thermolyse-Reaktors durch im Oxidations-Katalysator (30) entstehende Reaktionswärme erfolgt.

5. Vorrichtung nach Anspruch 3 oder 4, **dadurch gekennzeichnet, dass** der Thermolyse-Reaktor (10) mit dem Oxidations-Katalysator (30) thermisch gekoppelt ist.

6. Vorrichtung nach einem der Ansprüche 3 bis 5, **dadurch gekennzeichnet, dass** der Thermolyse-Reaktor (10) zumindest teilweise innerhalb des Oxidations-Katalysators (30) angeordnet ist.

7. Vorrichtung nach einem der Ansprüche 1 bis 6, **dadurch gekennzeichnet, dass** der Thermolyse-Reaktor (10) eine im Wesentlichen senkrecht zur Strömungsrichtung (28) des Abgasstroms ausgerichtete Heizfläche (38) aufweist.

8. Vorrichtung nach einem der Ansprüche 3 bis 7, **dadurch gekennzeichnet, dass** die Heizeinrichtung (40) eine Kraftstoff-Zuführeinrichtung (40) zur Zufuhr von Kraftstoff in den Oxidations-Katalysator aufweist.

9. Vorrichtung nach Anspruch 8, **dadurch gekennzeichnet, dass** die Kraftstoff-Zuführeinrichtung (40) eine Einspritzdüse (42) aufweist, die insbesondere in Strömungsrichtung (28) vor dem Oxidations-Katalysator (30) angeordnet ist.

10. Vorrichtung nach Anspruch 8 oder 9, **dadurch gekennzeichnet, dass** die Kraftstoff-Zufuhr im Wesentlichen nur in einen Teilbereich (48) des Oxidations-Katalysators (30) erfolgt, wobei dieser Teilbereich (48) vorzugsweise unmittelbar an den Thermolyse-Reaktor (10) angegrenzt.

11. Vorrichtung nach Anspruch 10, **dadurch gekennzeichnet, dass** der Oxidations-Katalysator (30) in dem Teilbereich (48) eine Zusatzbeschichtung aufweist.

12. Vorrichtung nach einem der Ansprüche 1 bis 11, **dadurch gekennzeichnet, dass** zwischen dem Thermolyse-Reaktor (10) und dem Katalysator (34) eine Mischeinrichtung (32) vorgesehen ist.

## Claims

1. A device for the reduction of nitrogen oxides in the exhaust gas of internal combustion engines, comprising
a thermolysis reactor (10) for producing ammonia from solid urea,
a heating means (17, 40) for heating a thermolysis chamber (20) of the thermolysis reactor (10), said heating means being thermally coupled with the thermolysis reactor (10), and
a SCR catalytic converter (34) downstream of the thermolysis reactor (10) in an exhaust gas channel (26), seen in the flow direction (28) of the exhaust gas, into which SCR-catalytic converter (34) the ammonia flows, possibly together with further reaction products,
the SCR catalytic converter (34) additionally serving as a hydrolysis catalytic converter,
**characterized in that**
said thermolysis reactor (10) is arranged immediately contiguous with the exhaust gas channel (26) or is arranged such that it protrudes at least partly into said exhaust gas channel (26).

2. The device of claim 1, **characterized in that** the heating means (17) is configured as an electric heating means.

3. The device of claim 1 or 2, **characterized in that** an oxidation catalytic converter (30) is arranged upstream of the thermolysis reactor (10) in the flow direction (28).

4. The device of claim 3, **characterized in that** the thermolysis reactor (10) is arranged in the immediate vicinity of the oxidation catalytic converter (30) so that the thermolysis reactor is heated by the reaction heat produced in the oxidation catalytic converter (30).

5. The device of claim 3 or 4, **characterized in that** the thermolysis reactor (10) is thermally coupled with the oxidation catalytic converter (30).

6. The device of one of claims 3 to 5, **characterized in that** the thermolysis reactor (10) is arranged at least partly in the oxidation catalytic converter (30).

7. The device of one of claims 1 to 6, **characterized in that** the thermolysis reactor (10) comprises a heating surface (38) substantially perpendicular with respect to the flow direction (28) of the exhaust gas flow.

8. The device of one of claims 3 to 7, **characterized in that** the heating means (17) comprises a fuel supply means (40) for the supply of fuel into the oxidation catalytic converter.

9. The device of claim 8, **characterized in that** the fuel supply means (40) comprises an injection nozzle (42) arranged, in particular, upstream of the oxidation catalytic converter (30), seen in the flow direction (28).

10. The device of claim 8 or 9, **characterized in that** the fuel is supplied substantially only into a part (48) of the oxidation catalytic converter (30), this part (48) preferably directly adjoining the thermolysis reactor (10).

11. The device of claim 10, **characterized in that** the oxidation catalytic converter (30) has an additional coating in this part (48).

12. The device of one of claims 1 to 11, **characterized in that** a mixer (32) is provided between the thermolysis reactor (10) and the catalytic converter (34).

## Revendications

1. Dispositif de réduction des oxydes d'azote dans les gaz d'échappement de moteurs à combustion interne, comprenant:
un réacteur de thermolyse (10) pour la production d'ammoniac à partir d'urée solide,
un moyen de chauffage (17, 40), thermiquement couplé avec ledit réacteur de thermolyse (10), pour chauffer une chambre de thermolyse (20) dudit réacteur de thermolyse (10) et
un catalyseur SCR (34) arrangé à l'aval du réacteur de thermolyse (10), vu dans la direction d'écoulement (28) des gaz d'échappement, dans un conduit de gaz d'échappement (26), dans lequel afflue l'ammoniac, en cas échéant avec d'autres produits de réaction,
ledit catalyseur SCR (34) en outre agissant comme catalyseur d'hydrolyse,
**caractérisé en ce que**
le réacteur de thermolyse (10) est disposé immédiatement avoisinant au conduit de gaz d'échappement (26) ou saillant au moins partiellement dans le conduit de gaz d'échappement (26).

2. Dispositif selon la revendication 1, **caractérisé en ce que** le moyen de chauffage (17) est réalisé comme moyen de chauffage électrique.

3. Dispositif selon la revendication 1 ou 2, **caractérisé en ce que**, vue dans la direction d'écoulement (28), un catalyseur d'oxydation (30) est disposé en amont dudit réacteur de thermolyse (10).

4. Dispositif selon la revendication 3, **caractérisé en ce que** le réacteur de thermolyse (10) est disposé directement avoisinant ledit catalyseur d'oxydation (30) de manière que le réacteur de thermolyse est chauffé par la chaleur de réaction produite dans le réacteur d'oxydation (30).

5. Dispositif selon la revendication 3 ou 4, **caractérisé en ce que** le réacteur de thermolyse (10) est couplé thermiquement avec le réacteur d'oxydation (30).

6. Dispositif selon l'une quelconque des revendications 3 à 5, **caractérisé en ce que** le réacteur de thermolyse (10) est disposé au moins partiellement dans le réacteur d'oxydation (30).

7. Dispositif selon l'une quelconque des revendications 1 à 6, **caractérisé en ce que** le réacteur de thermolyse (10) comprend une face de chauffage (38) orientée sensiblement perpendiculairement par rapport à la direction d'écoulement (28) du courant des gaz d'échappement.

8. Dispositif selon l'une quelconque des revendications 3 à 7, **caractérisé en ce que** le moyen de chauffage (40) comprend un moyen d'alimentation en carburant (40) pour alimenter le catalyseur d'oxydation en carburant.

9. Dispositif selon la revendication 8, **caractérisé en ce que** le dispositif d'alimentation en carburant (40) comprend un injecteur (42) qui est disposé notamment en amont du réacteur d'oxydation (30), vu dans la direction d'écoulement (28).

10. Dispositif selon la revendication 8 ou 9, **caractérisé en ce que** l'alimentation en carburant n'est sensiblement réalisé que dans une partie (48) du catalyseur d'oxydation (30), cette partie (48) étant, de préférence, immédiatement voisine au réacteur de thermolyse (10).

11. Dispositif selon la revendication 10, **caractérisé en ce que** le catalyseur d'oxydation (30) comprend un revêtement additionnel dans ladite partie (48).

12. Dispositif selon l'une quelconque des revendications 1 à 11, **caractérisé en ce qu'**un moyen mélangeur (32) est prévu entre le réacteur de thermolyse (10) et le catalyseur (34).
